# EUROPEAN PATENT APPLICATION

(11) **EP 0 583 548 A1**
(43) Date of publication of application: **23.02.1994**
(21) Application number: 93106484.4
(22) Date of filing: 21.04.1993
(51) Int. Cl.: G06F 15/20, G09G 5/14

(54) **Method for automatic font matching when sharing applications**

(30) Priority: 30.06.1992 US 906650
(71) Applicant: HEWLETT-PACKARD COMPANY, Palo Alto, California 94304-1181 (US)
(72) Inventor: Welti, Bruce C., Fort Collins, CO 80525 (US); Garfinkel, Daniel, Fort Collins, CO 80525 (US)
(74) Representative: Schoppe, Fritz, Dipl.-Ing.

(57) **Abstract**

A method for matching fonts in a client-server computer system environment (130, 140) in which an application (134) is being shared by multiple servers (132, 142). Penalty values are computed for font appearance attribute differences. Difference totals (summation of penalty values) are computed for all appearance attributes for a receiving server's (132, 142) candidate font and an application (134) designated font. For each font designated by the application (134), a difference total is computed for each font in a set of candidate fonts in each receiving server (132, 142). For each receiving server (132, 142), and for each application (134) designated font, one receiver font is selected which has the smallest difference total.

## Description

### FIELD OF INVENTION

This invention generally relates to computer software for displays and more particularly to software for selection of character fonts for displays.

### BACKGROUND OF THE INVENTION

Modern computer systems are often interconnected by networks. A useful feature in interconnected systems is the ability to have a sending computer control a window in a display in a receiving computer. The receiving computer might have multiple windows in a display, each controlled by a different computer. In a client-server network configuration, a server controls a display window for a client. An example of such software is X-Windows. X-Windows was developed and is distributed by the Massachusetts Institute of Technology, and is commercially available in various forms from multiple vendors.

X-Windows is graphics server software. In an X-Windows system, an application (client) sends commands to a server (X-Windows) to control a display. The X-Windows server, which may be local or remote, will provide graphics services in a standard manner. In an enhanced (shared) X-Windows configuration, an application sends commands to a first X-Windows server, which in turn communicates with multiple other X-Windows servers, each driving a display. This enables the application graphics commands to be rendered on multiple displays.

Ideally, commands for controlling a display window should be in a device independent format. The displays for the sending and receiving computers might have different resolution, different color or gray scale capabilities or other differences. Ideally, the receiving computer should be able to interpret device independent commands and implement the best possible rendering given the hardware and software capabilities and limitations of the receiving computer and display.

However, currently, there are limitations to true device independence. For example, a document description from the sending computer might specify fonts and other document appearance information. Currently, there is no one universal device independent standard for fonts. Instead, there are numerous "standards" from numerous vendors. In addition, fonts often have trademarked names so that fonts with a very similar appearance may be available under many different names from multiple vendors.

In general, a receiving computer might not have the same character fonts available as a sending computer. In typical prior art systems, if a font is not available to a receiving server, the receiving server either aborts the display process or reverts to a standard default font. Typically, both sending and receiving computers might have as many as 1,500 fonts available. It is particularly inappropriate to abort or default when a wide selection of alternative fonts is available. Instead, a receiving server needs to select alternative fonts and display a document which is as close as possible in appearance to a document specified by a sending server, given the limitations of fonts available to the receiving server.

For additional background information on X-Windows, use of fonts within X-Windows, and font terminology, see *X Protocol Reference Manual*, O'Reilly and Associates, Inc., 2nd Edition, 1990, especially Volume Zero, Appendix M, "Logical Font Description Conventions, Release 4".

### SUMMARY OF THE INVENTION

In a system where a first computer controls a window in a display in a second computer, the present invention is a method for selecting a font in the second computer which provides an optimal appearance match to a font specified by the first computer. In the present invention, differences in font attributes (character width, height, spacing, character set, slant and stroke weight) are assigned difference penalty values and multipliers related to the attribute's importance for document appearance. A display font is selected by a method which uses a combination of ordered sorting and sums of attribute difference penalties to find an optimal appearance match to the sender's font.

### BRIEF DESCRIPTION OF THE DRAWINGS

Figure 1 is a block diagram of networked computers containing software implementing the present invention.

Figure 2 is a chart illustrating a data structure used by the present invention.

Figure 3 is a flow chart illustrating a simplified version of the overall method comprising the present invention.

Figures 4A through 4G are flow charts illustrating the difference number computation method which is part of the method comprising the present invention.

Figure 4H is a table of penalty values and multipliers used in the difference number computation method illustrated by figures 4A through 4G.

### DETAILED DESCRIPTION OF THE PREFERRED EMBODIMENT OF THE INVENTION

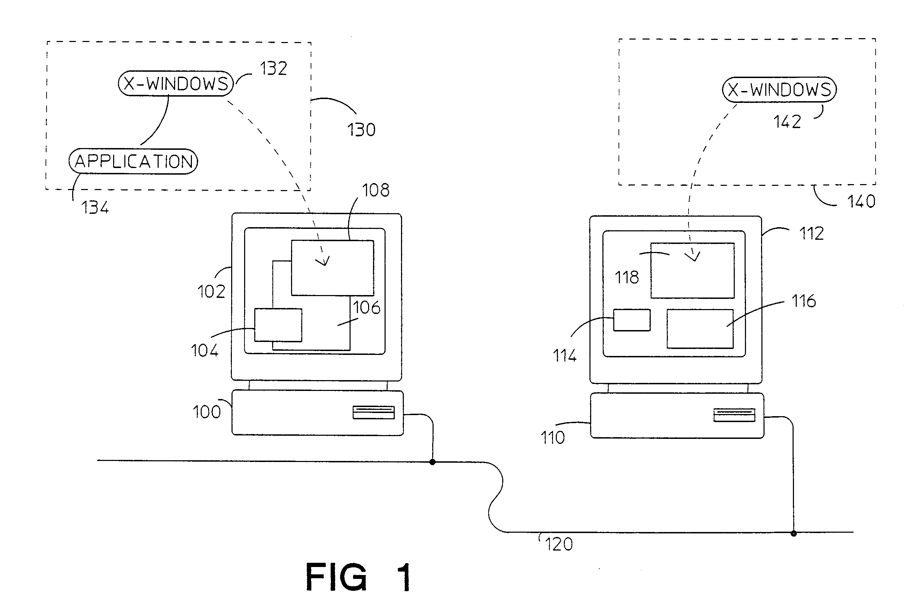

Figure 1 illustrates a networked computer system containing the present invention. A first computer 100 has a display 102. Display software partitions the display into multiple windows (104, 106 and 108), each of which may be displaying data or graphics from a separate application. Likewise, a second computer 110 has a display 112 which is partitioned into windows (114, 116 and 118). The two computers (100 and 110) are interconnected by a network 120.

In figure 1, box 130 represents software contained in computer 100 and box 140 represents software contained in computer 110. As an example of the use of the present invention, a client application 134 running in computer 100 employs X-Windows server software 132 to display a formatted document in window 108. The user of computer 100 wants the user of computer 110 to see the same document in window 118. Window sharing software built into enhanced X-Windows software 132 in computer 100 communicates over network 120 to X-Windows software 142 in computer 110 to display the document in window 118.

In general, X-Windows server 132 and X-Windows server 142 may not have the same set of fonts available.
The user of computer 100 may select a font which is not available on computer 110. The goal of the present invention is to select the best font available in computer 110 to enable rendering within window 118 a version of a document created in window 108.

In the preferred embodiment of the present invention, the receiving computer's font is selected by the sending computer. Fonts compatible with X-Windows are stored in a font file which contains information such as name, average character width, individual character spacing and other attribute data. The sending computer (e.g. figure 1, 100) reads a list of available font names from the receiving computer (e.g. figure 1, 110). The sending computer then builds a receiver specific table in compressed form which contains key attributes of the available receiver fonts. Then for each sender's font to be displayed, the sending computer searches its local receiver-specific font attributes table to select the best font for the receiving computer to use.

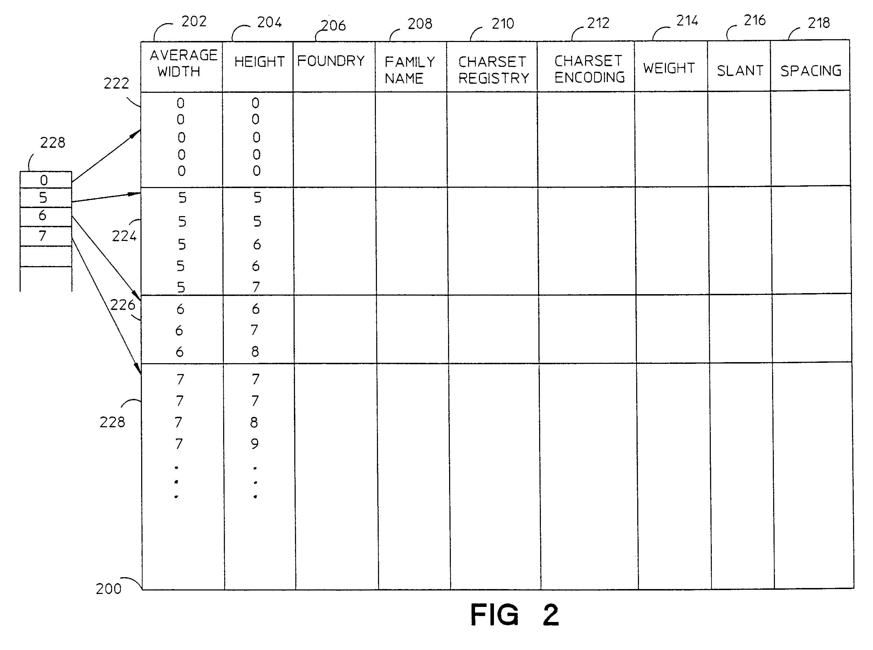

Figure 2 illustrates a receiver-specific font attributes table as stored in a sender. Box 200 represents the overall data structure. The attributes stored are average width 202, height 204, foundry 206, family name 208, charset registry 210, charset encoding 212, weight 214, slant 216 and spacing 218.

As illustrated in figure 2, the fonts in the receiver-specific table 200 are sorted first by average width 202, then height 204. That is, within a group of fonts having the same average width, the group is sorted by height. For example, in figure 2, group 224 is a group of fonts with identical average width sorted in order of increasing height. In addition, a list of indices 228 is computed in which each index points to the beginning of a group of fonts having the same width.

In general, fonts are defined by either outlines or bitmaps. Outline fonts are defined by graphical curves which can be scaled to any size at any resolution. Bitmap fonts define characters as raster pixel images. Bitmap fonts can also be scaled, although the scaled appearance may not be as desirable as scaled outlines. Non-scaleable fonts have an average character width and character height. Scaleable fonts can be scaled to any width and height. As described above, fonts compatible with X-Windows are stored in a font file which contains information such as average character width. For a scaleable font, the average character width is assigned a value of zero by X-Windows. This is true for all scaleable fonts, whether outline fonts or scaleable bitmaps. When the receiver's fonts are sorted by average character width for the table illustrated in figure 2, all the scaleable fonts sort to the top of the list (figure 2, 222).

In figure 2, the first pointer in the array of indices 228 points to the beginning of a list of scaleable fonts 222. The second pointer in the array of indices 228 points to the beginning of a sorted list of non-scaleable bitmap fonts 224 with specified average character widths 202.

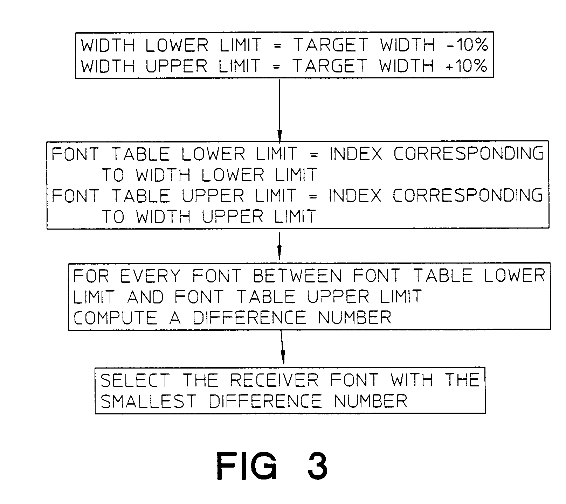

Figure 3 illustrates a simplified version of the selection method. When a font is to be selected, the list of indices is used to select a group of receiver fonts with a range of widths which includes receiver fonts which are narrower and wider than the sender's font.
Within this group, a difference number (sum of difference penalties) is computed for each potential receiver font. The receiver font with the smallest difference number is selected.

In the present invention, font attributes are assigned difference penalties which vary with the impact of the attribute on appearance. For example, if characters in the receiving computer are wider or taller than characters in the sending computer, rendered characters in the receiving computer may overlap or text may be truncated by window boundaries, resulting in a substantial impact on appearance. In contrast, an oblique font substitution for an italic font or a bold font substitution for a demi-bold font has a relatively insubstantial impact on appearance. Therefore, difference penalties for differences in attributes such as character width and height are larger than difference penalties for differences in attributes such as character weight and slant.

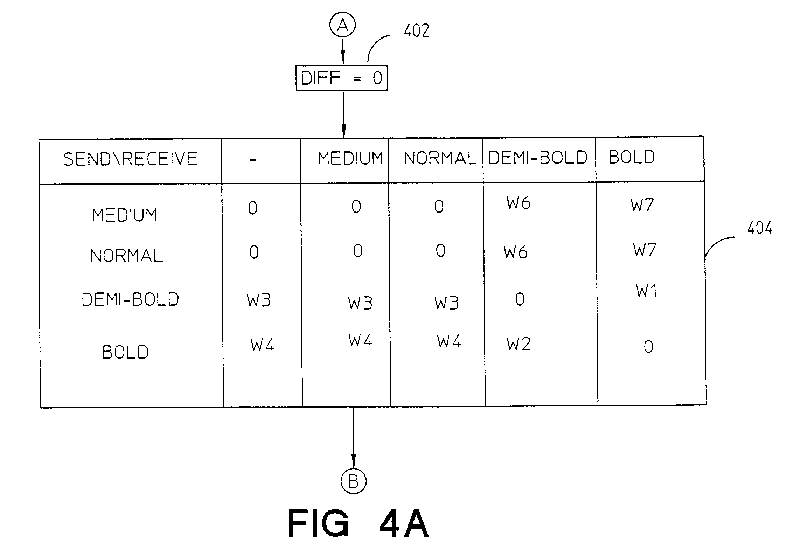

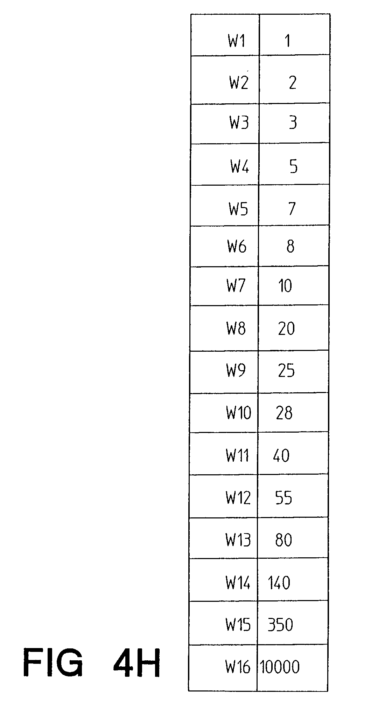

Figures 4A through 4G are flow charts illustrating the computation of the difference number. Throughout figures 4A through 4G, variable names W1 - W16 are penalty values and multipliers. A table illustrated in figure 4H gives the value of these variables as implemented in the preferred embodiment of the present invention. The value of these variables could be changed to provide a different emphasis on the various appearance attributes.

As illustrated in figure 4A, a difference number is first initialized to zero (402). Then, the weight of the sender's font is compared to the weight of the receiver's candidate font (404). Font weight refers to the thickness or width of individual character strokes or overall blackness. Table 404 in figure 4A illustrates the assigned difference number increment (penalty) for each possible combination of weight differences. Weights may be specified as "normal", "medium", "demi-bold", "bold" or unspecified ("-" in the table). In the present invention, "medium", "normal", and unspecified ("-") are interpreted to be equivalent weights.

In general, if the sender's font is heavier than normal (demi-bold or bold), any receiver's candidate font which is heavier than normal is a close (but not exact) match. Therefore, the penalty is small but not zero. For example, if the sender's font is demi-bold and the receiver's candidate font is bold, the assigned penalty in the table in figure 4A is just enough to distinguish from an exact match (difference number increment = 1). In contrast, if the sender's font is normal or medium and the receiver's candidate font is bold, the appearance difference is more significant and the penalty is assigned a larger value (difference number increment = 10).

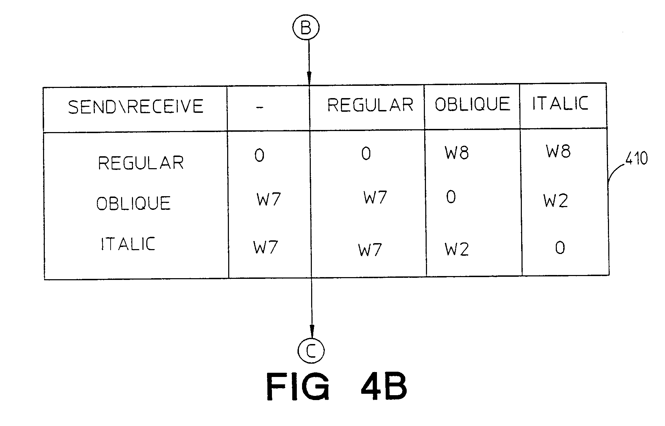

After a difference for weight is determined, a penalty for difference in character slant is determined as illustrated by table 410 in figure 4B. The choices for slant are "regular", "oblique", "italic"_{,} and unspecified ("-" in the table) . "Unspecified" is assumed to be the same as "regular". For any particular typeface, "italic" is a separate font, having distinctive design features. In contrast, "oblique" is a derived design obtained by slanting the regular design. The rationale of the table in figure 4B is as follows. If the sender's font is oblique or italic, a substitution of oblique for italic or italic for oblique is of relatively little appearance consequence and the assigned penalty is small (difference number increment = 2). If the sender's font is italic or oblique and the receiver's candidate font is regular, some important emphasis may be lost so the penalty is moderate (difference number increment = 10). If the sender's font is regular, substituting an oblique or italic font for a large amount of text creates a substantial appearance difference so the assigned penalty is still larger (difference number increment = 20).

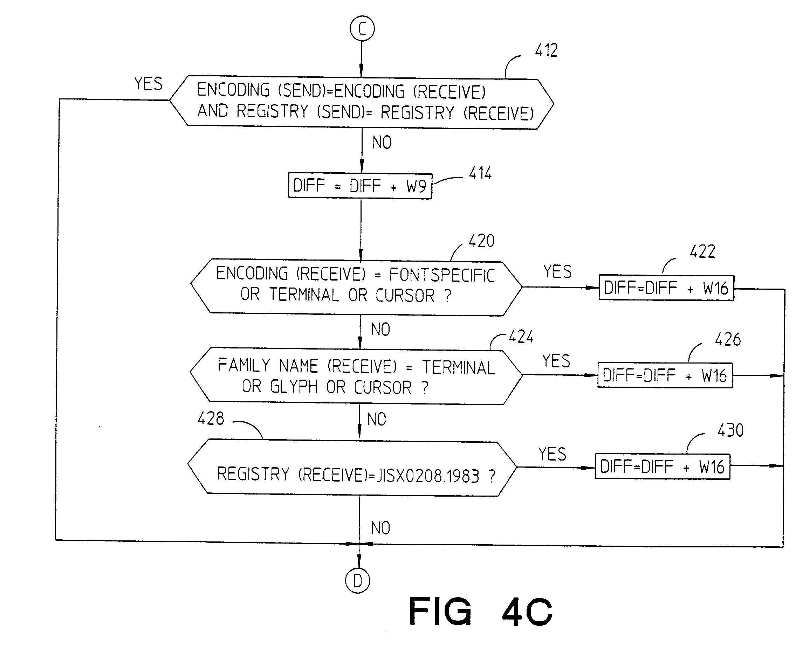

Figure 4C illustrates the steps used to compare character set encoding (the matching of a digital number to a particular symbol) and registry (vendor). Most computer fonts intended for printed English text comply with a standard encoding. The American National Standard Code for Information Interchange (ASCII) is a standard which assigns English character symbols and punctuation symbols to 7-bit numerical values. The 7-bit standard encoding is often extended to 8 bits to permit additional graphical symbols or character symbols for European languages. For example, Roman8 is a common standard for English encoding. For European encoding, there are standards developed by the International Organization for Standardization (ISO) (for example, ISO8859). Still other fonts are completely specialized and unique. For example, a font for Japanese character sets will have virtually nothing in common with a font for English or European character sets. In X-Windows, a font with specialized (non-standard) encoding will sometimes use the term "fontspecific" to designate a special encoding. In general, if the sender's font is standard and the receiver's candidate font is labelled "fontspecific" or has some other nonstandard designation, use of the receiver's candidate font would probably result in something unreadable. For these cases, the appearance difference number is meaningless as a selection criteria. Therefore, a penalty is assigned which virtually guarantees non-use.

In figure 4C, if the sender's font and the receiver's candidate font are from the same registry and have the same encoding designation, there is no difference penalty (decision 412). If encoding or registration are different (decision 412), the difference number is incremented by 25 (box 414). If the sender's font is not one of the non-standard encodings and the receiver's candidate font is non-standard, a very large difference penalty of 10,000 is added (box 442, 426 or 430) to ensure non-use. For example, the special case being tested in decision 428 is for a Japanese character set.

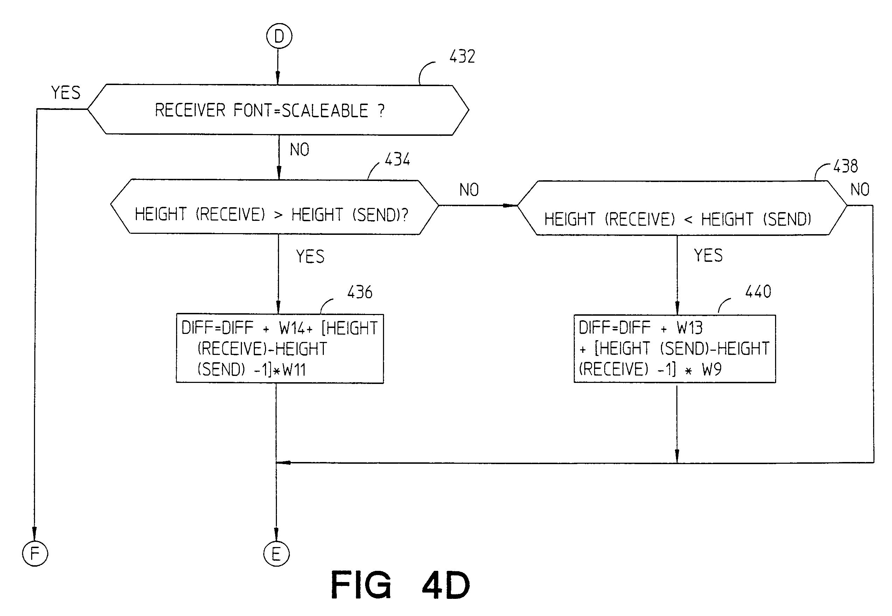

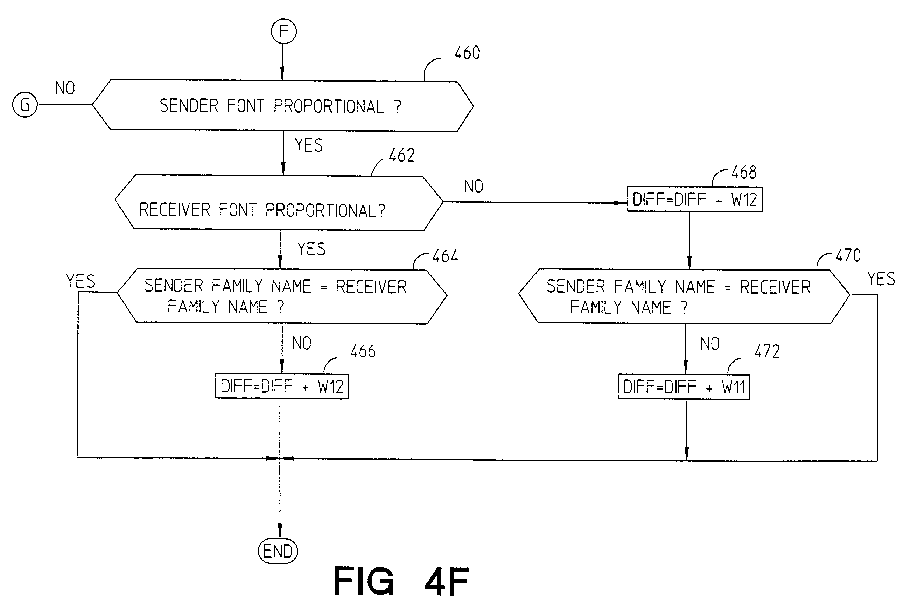

The next test is for character height as illustrated in figure 4D. As described above in conjunction with figure 2, the specified height for scaleable fonts is zero. In figure 4D, if height of the receiver's candidate font is zero (decision 432), the potential font is a scaleable font and height difference is irrelevant (use figure 4F). If the height of the receiver's candidate non-scaleable bitmap font is greater than the height of the sender's font (decision 434), rendered characters may overlap or text may be truncated at window boundaries. Therefore, a large difference penalty is assigned (box 436) which has a fixed portion and a portion proportional to the height difference. If the font height for the receiver's candidate font is less than the sender's font height (decision 440), appearance may change but it does result in a complete lack of readability. Therefore, a smaller but still substantial difference penalty is assigned (box 440).

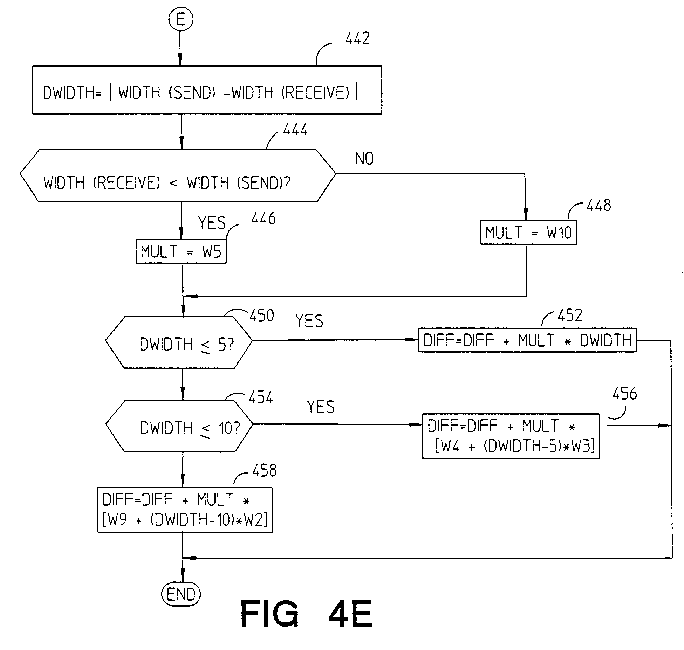

Figure 4E illustrates steps for testing differences in average character width and family name. Differences in character width are divided into three ranges depending on the magnitude of the difference. The assigned penalty has a base which depends on the range and an overall multiplier which depends on the sign of the difference. If the character width for the receiver's candidate font is wider than the sender's font character width, rendered characters may overlap or text may truncate at window boundaries. Therefore, if the character width for the receiver's candidate font is wider than the sender's font character width (decision 444), a larger multiplier (box 448) is assigned than if the character width for the receiver's candidate font is narrower than the sender's font character width (box 446). Overall difference penalties then depend on which of the three ranges includes the magnitude of the width difference (box 452, 456 or 458).

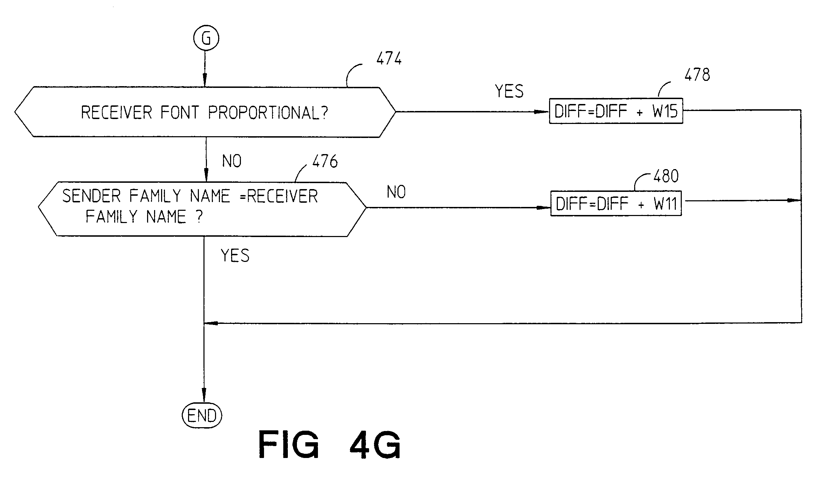

Figures 4F and 4G illustrate the computation of the difference penalty for character spacing differences and family name differences. "Family name" identifies all typeface designs that are variations of a basic typographic style. Examples of family names are Helvetica and Times Roman. Family names are often trademarked names from a specific "foundry" or vendor. In general, variations within a family name will have the same character spacing. If the sender's font has proportional spacing (decision 460), the steps illustrated in figure 4F are used. If the sender's font has fixed spacing, the steps illustrated in figure 4G are used.

In figure 4F, if both sender's font and receiver's candidate font have proportional spacing (decision 462), and both have the same family name (decision 464), there is no spacing penalty. If both sender's font and receiver's candidate font have proportional spacing but have different family names, the difference number increment is 55 (box 466). If the sender's font has proportional spacing but the receiver's candidate font has fixed spacing, the initial penalty is 55 (box 468). If, in addition, the family names are different (decision 470), an additional penalty of 40 is added to the difference number (box 472).

In figure 4G, if both the sender's font and the receiver's candidate font have fixed spacing (decision 474) and both have the same family name (decision 476), there is no difference number penalty. If the sender's font has fixed spacing but the receiver's candidate font has proportional spacing, a significant penalty of 350 is assigned (box 478). If the sender's font and the receiver's candidate font both have fixed spacing but different family names, a moderate penalty of 40 is assigned (box 480).

Recalling figure 3, after a difference number has been computed for each potential font in the receiving computer, the font in the receiving computer with the smallest difference number is selected

In summary, from the above discussion, if the fonts available in a receiving computer are not identical to the fonts specified by a sending computer, it can be seen that the method in the present invention is useful for selecting the best font in the receiving computer for an appearance match, given the limitations of the available fonts in the receiving computer. If an available font is identical, that identical font will be selected. The particular values for penalties and multipliers as illustrated in figure 4H have been selected for a broad base of common X-Windows users. The values can be varied to permit a different weighting of attributes. For example, in some applications, bold characters (weight) or italics (slant) may be very important to emphasize key words or phrases. The basic structure of the method provides flexibility in the relative priority of attributes. Also, the preferred embodiment of the present invention utilizes X-Windows. However, the general approach of using sums of difference penalties can be used for printers or any other font matching situation in which similar attribute data is known.

The foregoing description of the present invention has been presented for purposes of illustration and description. It is not intended to be exhaustive or to limit the invention to the precise form disclosed, and other modifications and variations may be possible in light of the above teachings. The embodiment was chosen and described in order to best explain the principles of the invention and its practical application to thereby enable others skilled in the art to best utilize the invention in various embodiments and various modifications as are suited to the particular use contemplated. It is intended that the appended claims be construed to include other alternative embodiments of the invention except insofar as limited by the prior art.

## Claims

1. In a client-server computer system, wherein an application (134) using a server (132) for graphical display (108) designates a font, a method for selecting a font in the server (132) to match the appearance of the application font, the method comprising the following steps:
A. designating a plurality of font appearance attributes (202, 204, 206, 208, 210, 212, 214, 216, 218) for measurement;
B. selecting a plurality of candidate fonts within the server (132);
C. computing a difference value (422, 426, 430, 436, 440, 452, 456, 458, 468, 466, 472, 478, 480) for a difference between a particular attribute for a particular candidate font and the particular attribute for the application font;
D. computing a difference total for the particular candidate font by summing the results of step C for each attribute in the plurality of font appearance attributes for the particular candidate font;
E. repeating step D for each candidate font in the plurality of candidate fonts;
F. selecting one candidate font within the plurality of candidate fonts which has the smallest difference total.

2. A method as in claim 1 wherein step B further comprises:
B1. sorting server fonts by average character width (202);
B2. selecting a plurality of candidate fonts from the sorted server fonts by selecting a range of average character widths (222, 224, 226, 228) which includes the average character width of the application font.

3. A method as in claim 1 wherein a sending server (132) uses the method of claim 1 to select a matching font in a receiving server (142).

4. A method as in claim 1 wherein appearance font attributes comprise character weight (214, 404), character slant (216, 410), character set encoding (212, 412, 420), registry (210, 412, 428), character height (204, 434, 438), family name (208, 424) and average character width (202, 442).
